Europäisches Patentamt

European Patent Office

Office européen des brevets

(19)

(11) Veröffentlichungsnummer: **0 000 142**
**B1**

(12) **EUROPÄISCHE PATENTSCHRIFT**

(21) Anmeldenummer: **78100150.8**

(22) Anmeldetag: **14.06.78**

(51) Int. Cl.³: **C 08 G 69/28**

(54) Verfahren zur Herstellung von Polyamiden

(30) Priorität: **27.06.77 DE 2728931**

(43) Veröffentlichungstag der Anmeldung:
**10.01.79 Patentblatt 79/01**

(45) Bekanntmachung des Hinweises auf die
Patenterteilung:
**20.08.80 Patentblatt 80/17**

(84) Benannte Vertragsstaaten:
**BE DE FR GB NL**

(56) Entgegenhaltungen:
GB - A - 1 442 033

(73) Patentinhaber: **BASF Aktiengesellschaft**
**Carl-Bosch-Strasse 38**
**D - 6700 Ludwigshafen (DE)**

(72) Erfinder: **Eckell, Albrecht, Dr.**
**Paul-Klee-Strasse 2**
**D - 6710 Frankenthal (DE)**
**Matthies, Paul, Dr.**
**Truebnerstrasse 59**
**D - 6900 Heidelberg (DE)**
**Pilz, Georg**
**Ahornweg 4**
**D - 6730 Neustadt 19 (DE)**
**Rotzoll, Rudi-Heinz, Dr.**
**Donnersbergstrasse 8**
**D - 6703 Limburgerhof (DE)**

Courier Press, Leamington Spa, England.

Verfahren zur Herstellung von Polyamiden

Gegenstand der Erfindung ist ein Verfahren zur Herstellung von Polyamiden durch Erhitzen von Wäßrigen Lösungen von Salzen aus Dicarbonsäuren und Diaminen auf polyamidbildende Temperaturen unter erhöhtem Druck und Entfernen von Wasser.

Bei der in der Technik wohlbekannten Herstellung von Polyamiden durch Kondensation von Salzen aus Diaminen und Dicarbonsäuren, wie Hexamethylendiammoniumadipat geht man in der Regel von wäßrigen Lösungen solcher Salze aus. Wie aus der GB—PS 674 954, DT—PS 10 60 139 oder DT—AS 11 58 257 hervorgeht, verwendet man in der Regel 45 bis 70 gewichtsprozentige wäßrige Salzlösungen. Vor der eigentlichen Polykondensation muß jedoch durch eine Vorverdampferstufe aus solchen Lösungen das überschüssige Wasser zum größten Teil entfernt werden, z.B. bis auf einen Rest von 30 bis 10 Gewichtsprozent Wasser. Dies bedeutet, daß die verwendeten wäßrigen Salzlösungen zunächst aufgeheizt werden müssen und überschüssiges Wasser verdampft werden muß, was erhebliche Mengen an Energie bedarf, und daß erst dann die eigentliche Kondensation durchgeführt werden kann.

Es wurde auch schon versucht, diesen Nachteilen dadurch zu begegnen, indem man von geschmolzener Adipinsäure und flüssigem Hexamethylendiamin ausgeht wie aus der GB—PS 1 018 653 und BE—PS 640 369 bekannt ist. Die Arbeitsweise mit geschmolzenen Ausgangsstoffen bringt erhebliche Probleme bei der Dosierung und bei der raschen Vermischung mit sich. Darüber hinaus neigt geschmolzene Adiponsäure zur Decarboxylierung und Bildung von Adipinsäureanhydrid.

Es war deshalb die technische Aufgabe gestellt, bei der Herstellung von Polyamiden die Verdampfung großer Wassermengen zu vermeiden und andererseits die Dosierschwierigkeiten von geschmolzenen flüssigen Ausgangsstoffen zu umgehen.

Diese Aufgabe wird gelöst in einem Verfahren zur Herstellung von Polyamiden durch Erhitzen von wäßrigen Lösungen von Salzen aus Alkandicarbonsäuren mit 6 bis 12 Kohlenstoffatomen und Diaminen der Formel $NH_2RNH_2$, in der R einen Alkylenrest mit 6 bis 12 Kohlenstoffatomen bedeutet auf polyamidbildende Temperaturen unter erhöhtem Druck und Entfernen von Wasser, wobei man von 75 bis 90 gewichtsprozentigen wäßrigen Lösungen von Salzen aus Dicarbonsäuren und Diaminen ausgeht, die durch Neutralisation von 40 bis 65 Gew.%igen Salzlösungen einer Temperatur von 60 bis 110°C, die eine entsprechende Menge der jeweiligen Dicarbonsäure im Überschuß gelöst enthalten, mit den entsprechenden Diaminen unter erhöhtem Druck unter Einhaltung von Endtemperaturen von 140 bis 210°C erhalten wurden.

Das neue Verfahren hat den Vorteil, daß man wesentlich weniger Wasser bei der Polykondensation verdampfen muß, was den Vorteil kleinerer Vorrichtungen beinhaltet. Darüber hinaus ist es möglich, das Verfahren durch Ausnutzen der Neutralisationwärme energiesparender durchzuführen. Ferner ist eine konzentrierte Lösung von solchen Salzen leichter zu handhaben im Vergleich zu geschmolzenen Ausgangsstoffen.

Im Hinblick auf die DT—OS 24 03 178, Seite 4, schien es nicht angezeigt, von sehr hoch konzentrierten Salzen aus Dicarbonsäuren und Diaminen auszugehen, da hierbei Schwierigkeiten, z.B. durch Abbau des Salzes zu erwarten waren.

Als Ausgangsstoffe verwendet man Alkandicarbonsäuren mit 6 bis 12 Kohlenstoffatomen. Besonders geeignet sind $\alpha,\omega$-geradkettige Alkandicarbonsäuren der genannten Kohlenstoffzahl. Geeignete Dicarbonsäuren sind beispielsweise Adipinsäure, Korksäure, Azelainsäure, Dekandisäure, oder Dodecandisäure. Besondere technische Bedeutung haben Adipinsäure, Sebazinsäure und Dodecandisäure erlangt.

Als Diamine verwendet man Alkandiamine der Formel $NH_2RNH_2$, in der R einen Alkylenrest mit 6 bis 12 Kohlenstoffatomen, insbesondere $\alpha,\omega$-geradkettige Alkandiamine. Geeignete Diamine sind beispielsweise Hexamethylendiamin, Octamethylendiamin, Decamethylendiamin und Dodecamethylendiamin. Besondere technische Bedeutung hat Hexamethylendiamin erlangt.

Zunächst geht man von weniger konzentrierten wäßrigen Salzlösungen aus Dicarbonsäure und Diaminen aus. Solche Salzlösungen haben einen Gehalt von 40 bis 65 Gewichtsprozent an den entsprechenden Salzen. Nach einer bevorzugten Arbeitsweise löst man in einer solchen Salzlösung zusätzlich Dicarbonsäure in einer Menge, die erforderlich ist, um die gewünschte Endkonzentration an Salz zu erreichen. Die Lösung der Dicarbonsäure erfolgt bei Temperaturen von 60 bis 110°C. Die so erhaltene, freie Dicarbonsäuren enthaltende, Salzlösung wird dann mit dem entsprechenden Diamin, vorteilhaft in geschmolzener Form, neutralisiert.

Nach einer anderen bevorzugten Arbeitsweise mischt man kristalline Dicarbonsäure mit einer wäßrigen Lösung von Diamin, wobei man jedoch die Dicarbonsäure im Überschuß verwendet. Hierdurch erhält man zunächst eine Salzlösung niederer Konzentration, z.B. 40 bis 65 Gewichtsprozent, bezogen auf Salz und Wasser, die zusätzlich überschüssige Dicarbonsäure gelöst enthält. Hierbei hält man in der Regel Temperaturen von 60 bis 110°C ein. Die so erhaltene Lösung wird, wie oben beschrieben, dann mit flüssigem Diamin neutralisiert.

Die Neutralisation erfolgt z.B. in Mischstrecken, die Einbauten zur raschen Durchmischung enthalten, wobei man vorteilhaft zunächst nicht die gesamte zur Neutralisation notwendige Diaminmenge zugibt und erst nach einem ersten Mischvorgang und Ermittlung des pH-Wertes die Endeinstellung mit einer weiteren Diaminzugabe bewerkstelligt.

Als Neutralisation sei erfindungsgemäß die Erreichung ders Äquivalenzpunktes für die jeweiligen Salze aus Diaminen und Dicarbonsäuren verstanden. Für Hexamethylendiammoniumadipat ist dies beispielsweise pH 7,62, für Hexamethylendiammoniumsebazat pH 7,5 (gemessen nach Verdünnung in 10 gewichtsprozentiger wäßriger Lösung bei 25°C). Es versteht sich, daß man den Dicarbonsäuremengen äquivalente Mengen an Diaminen, gegebenenfalls in geringem Überschuß, z.B. bis 1 Molprozent zum Ausgleich von Diaminverlusten bei der Kondensation, zusetzt.

Zweckmäßig führt man die Neutralisation unter Ausschluß von molekularem Sauerstoff, z.B. unter Inertgas, durch.

Durch die bei der Neutralisation freiwerdende Wärme erhitzt sich das Reaktionsgemisch. Man hält Endtemperaturen bei der Neutralisation von 140 bis 210°C, insbesondere 170 bis 200°C ein. In der Regel wird die Neutralisation unter erhöhtem Druck, z.B. 2 bis 15 bar, durchgeführt.

Die so erhaltenen Salzlösungen aus Dicarbonsäuren und Diaminen sollen einen Gehalt von 75 bis 90 Gewichtsprozent haben. Besonders bevorzugt wird ein Gehalt von 80 bis 85 Gewichtsprozent an den jeweiligen Salzen. Besondere Bedeutung haben Salzlösungen von Hexamethylendiammoniumadipat der genannten Konzentration erlangt.

Die so hergestellten hochkonzentrierten Salzlösungen aus Dicarbonsäuren und Diaminen werden in an sich bekannter Weise zu Polyamiden kondensiert. Die Kondensation erfolgt in der Regel bei Temperaturen von 240 bis 300°C. Besonders bevorzugt werden Temperaturen von 260 bis 290°C angewandt. Im allgemeinen wendet man hierbei Drücke bis zu 100 bar an, insbesondere haben sich Drücke von 20 bis 80 bar bewährt. Während der Kondensation wird das noch mit der Salzlösung eingebrachte Wasser, sowie das bei der Kondensation entstehende Wasser entfernt. Dies kann z.B. so geschehen, daß das Wasser während der Kondensation stufenweise abgetrennt wird. Es ist aber auch möglich, insbesondere bei kontinuierlichen Verfahren, das Wasser nach der Kondensation in der Endstufe abzutrennen.

Zusätzlich können Regler, wie niedere Fettsäuren, Stabilisatoren, Antistatikmittel und Mattierungsmittel vor, während oder nach der Kondensation zugegeben werden.

Das Kondensationsverfahren kann diskontinuierlich durchgeführt werden. Vorteilhaft wendet man jedoch kontinuierliche Arbeitsweisen an. Geeignete Arbeitsweisen werden beispielsweise beschrieben in der DT—AS 14 95 087, GB—PS 1 195 151, DT—PS 10 60 139 und GB—PS 674 oder DT—OS 24 17 003.

Polyamide, die nach dem Verfahren der Erfindung hergestellt werden, eignen sich zur Erzeugung geformter Gebilde aus der Schmelze, wie Fäden, Fasern, Formteilen, Platten oder Überzügen.

Das Verfahren nach der Erfindung sei an folgendem Beispiel veranschaulicht.

Beispiel

5250 g AH-Salz (Hexamethylendiammoniumadipat) wurden in einem 40-1-Rührautoklaven in 3450 g Wasser unter Erwärmen auf 95°C gelöst. Zu der so erhaltenen 60,3 prozentigen AH-Salz-Lösung wurden 8025 g feste Adipinsäure allmählich unter Rühren bei 90—95°C zugegeben und gelöst. Der Autoklav wurde mit Stickstoff gespült und verschlossen. Der Inhalt wurde auf 100°C erhitzt, wobei sich ein Druck von 2 bar einstellte (alle Druckangaben sind Absolutwerte). 6375 g geschmolzenes Hexamethylendiamin von 100°C wurden aus einem Zulaufgefäß mit Sickstoffdruck innerhalb von 2 Minuten bei laufendem Rührer in den Autoklaven gedrückt. In der so erhaltenen 85 prozentigen AH-Salz-Lösung stieg die Temperatur durch die freiwerdende Neutralisationswärme an und erreichte 2 Minuten nach Zugabe des Hexamethylendiamins 162°C. Während der Zugabe des Hexamethylendiamins stieg der Druck vorübergehend auf 4 bar und fiel bis zum Ende ser Zugabe auf 3 bar.

Die Ah-Salz-Lösung wurde ohne vorherige Abkühlung polykondensiert. Sie wurde innerhalb von 31/2 Stunden auf 275°C erhitzt, wobei der Druck durch Abblasen von Wasserdampf auf 19 bar gehalten wurde. Nach Erreichen von 275°C wurde innerhalb von 1 Stunde auf Normaldruck entspannt und 1 Stunde bei 275°C nachkondensiert. Das Produkt wurde mit Stickstoffdruck aus dem Autoklaven herausgedrückt, wobei der Schmelzestrang in einem Wasserbad abgekühlt und granuliert wurde. Das erhaltene Polyamid 6,6 hatte eine relative Viskosität von 2,54, gemessen in 1 prozentiger Lösung in 96 prozentiger Schwefelsäure, und einen Gehalt an sauren Gruppen von 54 mAq/kg und an basischen Gruppen von 76 mÄq/kg.

In analoger Weise erhält man Polyamid 6,9 und Polyamid 10,6.

**Patentansprüche**

1. Verfahren zur Herstellung von Polyamiden durch Erhitzen von 75 bis 90 gewichtsprozentigen wäßrigen Lösungen von Salzen aus Alkandicarbonsäuren mit 6 bis 12 Kohlenstoffatomen und Alkandiaminen der Formel H$_2$N—R—NH$_2$ in der R einen Alkylenrest mit 6 bis 12 Kohlenstoffatomen bedeutet auf polyamidbildende Temperaturen unter ehöhtem Druck und Entfernen von Wasser, dadurch gekennzeichnet, daß man von 75 bis 90 gewichtsprozentigen wäßrigen Lösungen von Salzen aus Dicarbonsäuren und Diaminen ausgeht, die durch Neutralisation von 40 bis 65 gewichtsprozentigen Salzlösungen einer Temperatur von 60 bis 110°C, die eine entsprechende Menge der jeweiligen Dicarbonsäure im Überschuß gelöst enthalten, mit den entsprechenden Diaminen unter erhöhtem Druck und unter Einhaltung von Endtemperaturen von 140 bis 210°C erhalten wurden.

2. Verfahren nach Anspruch 1, dadurch gekennzeichnet, daß man von Lösungen ausgeht, die durch Lösen der entsprechenden Menge an Dicarbonsäure in einer 40 bis 65 gewichtsprozentigen wäßrigen Salzlösung und Neutralisieren mit flüssigem Diamin erhalten wurden.

3. Verfahren nach Anspruch 1, dadurch gekennzeichnet, daß man von Salzlösungen ausgeht, die durch Mischen von festen Dicarbonsäuren mit einem wäßrigen Diamin im Unterschuß und anschließende Neutralisierung der so erhaltenen, überschüssige Dicarbonsäure enthaltenden, 40 bis 65 gewichtsprozentigen Salzlösung mit geschmolzenem Diamin erhalten wurden.

4. Verfahren nach den Ansprüchen 1 bis 3, dadurch gekennzeichnet, daß die 75 bis 90 gewichtsprozentigen Salzlösungen ohne Abführen der Neutralisationswärme der Kondensation zugeführt werden.

**Revendications**

1. Procédé de préparation de polyamides par chauffage de solutions aqueuses d'une concentration de 75 à 95% en poids en sels d'acides alcane-dicarboxyliques en C$_6$ à C$_{12}$ et d'alcane-diamines de la formule H$_2$N—R—NH$_2$, dans laquelle le symbole R représente un radical alcoylène en C$_6$ à C$_{12}$, sous pression accrue à une température à laquelle se forme un polyamide, avec élimination de l'eau, caractérisé en ce que l'on emploie une solution aqueuse d'une concentration en sel d'acide dicarboxylique et de diamine comprise entre 75 et 90% en poids, obtenue par neutralisation d'une solution de sel d'une concentration de 40 à 65% en poids, se trouvant à une température comprise entre 60 et 110°C et contenant un excès de l'acide dicarboxylique à condenser, par la diamine à condenser, cette neutralisation étant réalisée sous pression accrue et avec une température finale comprise entre 140 et 210°C.

2. Procédé suivant la revendication 1, caractérisé en ce que la solution aqueuse de sel est une solution obtenue par dissolution de la proportion appropriée d'acide dicarboxylique dans une solution aqueuse de sel d'une concentration de 40 à 65% en poids, suivie de la neutralisation par la diamine liquide.

3. Procédé suivant la revendication 1, caractérisé en ce que la solution de sel est une solution obtenue par dissolution d'un acide dicarboxylique solide dans une solution aqueuse d'une diamine, contenant une proportion de diamine inférieure à la proportion stoechiométrique par rapport à l'acide, suivie de la neutralisation de la solution de sel d'une concentration de 40 à 65% en poids, contenant de l'acide dicarboxylique en excès, par de la diamine fondue.

4. Procédé suivant l'une quelconque des revendications 1 à 3, caractérisé en ce que la solution de sel d'une concentration de 75 à 90% en poids est soumise à la condensation sans élimination préalable de la chaleur de neutralisation.

**Claims**

1. A process for the manufacture of polyamides by heating 75 to 90 wt.% aqueous solutions of salts of alkanedicarboxylic acids of 6 to 12 carbon atoms and alkanediamines of the formula H$_2$N—R—NH$_2$, where R denotes alkylene of 6 to 12 carbon atoms, at polyamide-forming temperatures at elevated pressure and with the removal of water, characterized in that use is made of 75 to 90 wt.% aqueous solutions of salts of dicarboxylic acids and diamines obtained by neutralizing 40 to 65 wt.% salt solutions, having a temperature of 60 to 110°C and containing an appropriate amount of the dicarboxylic acid concerned in excess in dissolved form, with the appropriate diamines at elevated pressure while maintaining final temperatures of 140 to 210°C.

2. A process as claimed in claim 1, characterized in that use is made of solutions obtained by dissolving the appropriate amount of dicarboxylic acid in a 40 to 65 wt.% aqueous salt solution and neutralizing with liquid diamine.

3. A process as claimed in claim 1, characterized in that use is made of salt solutions obtained by mixing a solid dicarboxylic acid with a less than equivalent amount of an aqueous diamine and neutralizing the resulting 40 to 65 wt.% salt solution containing an excess of dicarboxylic acid with molten diamine.

4. A process as claimed in claim 1 to 3, characterized in that the 75 to 90 wt.% salt solutions are introduced into the condensation zone without removal of the heat of neutralization.